(19) Europäisches Patentamt
European Patent Office
Office européen des brevets

(11) EP 2 687 483 A1

(12) EUROPEAN PATENT APPLICATION

(43) Date of publication:
**22.01.2014 Bulletin 2014/04**

(51) Int Cl.:
***C01B 31/00*** *(2006.01)* ***C01B 31/04*** *(2006.01)*

(21) Application number: **12176522.6**

(22) Date of filing: **16.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **BASF SE**
  **67056 Ludwigshafen (DE)**
- **Max-Planck-Gesellschaft zur Förderung der Wissenschaften e.V.**
  **80539 München (DE)**

(72) Inventors:
- **Schwab, Matthias Georg**
  **68199 Mannheim (DE)**
- **Müllen, Klaus**
  **50939 Köln (DE)**
- **Xinliang, Feng**
  **55122 (DE)**
- **Parvez, Khaled**
  **55131 Mainz (DE)**

(74) Representative: **Reitstötter - Kinzebach Patentanwälte**
**Ludwigsplatz 4**
**67059 Ludwigshafen (DE)**

Remarks:
Claims 16 - 31 are deemed to be abandoned due to non-payment of the claims fees (Rule 45(3) EPC).

# (54) Graphene containing nitrogen and optionally iron and/or cobalt

(57) The present invention relates to nitrogen-doped graphene, a method for its preparation and its use for producing a catalyst, an electrode, a battery, a supercapacitor, preferably an all solid state supercapacitor, or an aerogel. The invention further relates to catalysts, electrodes, all solid state supercapacitors (ASSS) and aerogels comprising nitrogen-doped graphene.

EP 2 687 483 A1

## Description

The present invention relates to nitrogen-doped graphene, a method for its preparation and its use for producing a catalyst, an electrode, a battery, a supercapacitor, preferably an all solid state supercapacitor, or an aerogel. The invention further relates to catalysts, electrodes, all solid state supercapacitors (ASSS) and aerogels comprising nitrogen-doped graphene.

Description

Graphene, a monolayer of carbon atoms arranged in a two-dimensional honeycomb network, shows some very interesting properties, such as an excellent electrical and thermal conductivity, high thermal and chemical stability and a high surface area.

The cathodic oxygen reduction reaction (ORR) plays a crucial role for electrochemical energy conversion in fuel cells. Platinum based materials have long been envisaged as active catalysts for ORR, whereas such noble metal catalysts can hardly meet the demands allowing for widespread commercialization of fuel cells due to their high cost, sluggish electron transfer kinetics and limited supply. Moreover, during the long term electrochemical process, Pt-based catalysts generally suffer from surface oxide formation, particle dissolution and aggregation in alkaline electrolytes. Therefore, numerous efforts have been devoted to substitute Pt-based catalysts. Among them, nitrogen doped carbon nanotubes, mesoporous graphitic arrays and non-precious transition metal catalysts such as iron or cobalt coordinated to nitrogen doped carbons have been proposed as potential electrocatalysts for ORR given their advantages such as low cost, excellent electrocatalytic activity, long durability and environmentally benign character.

Recently, nitrogen-doped graphene (NG) has been shown to possess high electrocatalytic activity and long-term operational stability for ORR; see L. Qu, Y. Liu, J.-B. Baek, L. Dai, ACS Nano 2010, 4, 1321. However, there are only a handful of studies on the preparation of nitrogen doped graphene (NG) so far such as treating graphene in ammonia at high temperature (X. Li, H. Wang, J.T. Robinson, H. Sanchez, G. Diankov, H. Dai, J. Am. Chem. Soc. 2009, 131, 15939) or using an ammonia plasma (Y.-C. Lin, C.-Y. Lin, P.-W. Chiu, Appl. Phys. Lett. 2010, 96, 133110) and growth of nitrogen doped graphene on Ni substrates by chemical vapor deposition (CVD; L. Qu, Y. Liu, J.-B. Baek, L. Dai, ACS Nano 2010, 4, 1321). All these processes require vacuum conditions and are difficult to scale up, which limits the practical use of NG. On the other hand, NG with high surface area is expected to provide favorable active sites for effective coordination with Fe or Co components when they are mixed together, which may lead to enhanced electrochemical performance with synergistic effect in ORR. Thereby, an expeditious method to fabricate NG with controllable nitrogen moieties and high surface area is highly desirable.

Accordingly, it was an object of the present invention to provide a graphene material useful as catalyst, preferably as electrocatalyst for oxygen reduction reactions, as or in electrodes, in supercapacitors or in batteries, and an expedient method for producing such a material.

This object is achieved by nitrogen-doped graphene comprising 3 to 12% by weight, preferably 3.5 to 12% by weight, in particular 4 to 12% by weight, for example 4 to 11% % by weight or 4 to 10.5% by weight, of nitrogen, calculated as N, based on the total weight of carbon and nitrogen contained in the nitrogen-doped graphene.

The above-given percentages of the nitrogen content relate to the overall weight of carbon and nitrogen contained in the nitrogen-doped graphene of the invention. They do not relate in all cases to the finished nitrogen-doped graphene as the latter may contain further elements and compounds, in particular metals; see below. The overall weight of carbon and nitrogen contained in the nitrogen-doped graphene of the invention coincides with the finished nitrogen-doped graphene only in case that no further starting materials (especially metals) have been used and that the obtained material has been freed from any solvent etc. used during synthesis. The above-given percentages include however small amounts of oxygen and/or hydrogen sometimes present in the nitrogen-doped graphene which originate from the starting material of the synthesis of nitrogen-doped graphene, especially from graphene oxide. Thus, to be more precise, the nitrogen-doped graphene of the invention comprises 3 to 12% by weight, preferably 3.5 to 12% by weight, in particular 4 to 12% by weight, for example 4 to 11% by weight or 4 to 10.5% by weight, of nitrogen, calculated as N, based on the total weight of carbon, nitrogen, oxygen and hydrogen contained in the nitrogen-doped graphene.

The remarks made below with respect to the nitrogen-doped graphene according to the invention and different properties thereof, to the method for producing it and the product obtainable with that method, to the different uses for the nitrogen-doped graphene and to different products containing it apply both on their own as well as, in particular, in any possible combination with each other.

Graphene is a monolayer of carbon atoms arranged in a two-dimensional honeycomb network. "Graphene" in the terms of the present invention is however not restricted to a material consisting exclusively of single-layer graphene (i.e. graphene in the proper sense and according to the IUPAC definition), but, like in many publications and as used by most commercial providers, rather denotes a graphenic bulk material, which is generally a mixture of a single-layer material, a bi-layer material and a material containing 3 to 10 layers and sometimes even up to 20 layers ("few layer

graphene"). The ratio of the different materials (single, bi and multiple layers) depends on the production process and provider. In case of the present invention, the material preferably contains about 10 to 50% by weight of single-layer material, the remaining portion being essentially material with two to ten layers ("few layer graphene").

In the terms of the present invention, "doped" relates to nitrogen atoms which are incorporated into the graphene lattice, preferably by forming (chemical) bonds between nitrogen and the carbon atoms of the graphene lattice. The nitrogen atoms may be present at the edges as well as at the basal plane of the graphene sheet. However, it is also possible that individual nitrogen atoms are not part of the graphene lattice. Preferably, all or nearly all of the nitrogen atoms provided via the respective starting materials (see below) are incorporated into the graphene lattice in the course of the synthesis reaction. However, it is also possible that smaller amounts of nitrogen atoms be only chemically or physically adsorbed on the surface of the graphene, generally in form of the respective starting material used or of an intermediate formed during the synthesis reaction. Usually, the amount of said chemically or physically adsorbed nitrogen is less than 10 % of the amount of nitrogen forming bonds with the carbon atoms of the graphene lattice.

According to XPS (X-ray photoelectron spectroscopy), the nitrogen-doped graphene according to the invention contains at least part of the nitrogen in form of pyridinic and/or graphitic nitrogen atoms. Pyridinic nitrogen atoms are part of six-membered rings and are bound to two carbon atoms, thus being part of pyridine-like rings. During synthesis, they can be oxidized, for example by oxygen of graphene oxide used as starting material, resulting in pyridinic $N^+$-$O^-$ groups. Graphitic nitrogen atoms are part of six-membered rings and are bound to three carbon atoms, thus being bridging atoms between three fused rings. Such graphitic nitrogen atoms are generally quaternized, suitable counterions being for example hydroxide and halides, in particular chloride. While graphitic carbon atoms can be part of a large fused system, pyridinic nitrogen atoms are either on the margin of the system or form "defects" in the honeycomb network.

Without wishing to be bound by theory, it is assumed that the nitrogen-doped graphene according to the invention comprises following structural elements (the below structure is to be understood only as a schematic illustration):

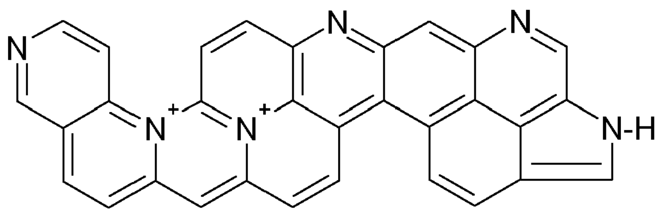

The nitrogen-doped graphene according to the invention has a high BET (Brunauer-Emmett-Teller) surface are. Preferably, the BET area is at least 200 $m^2/g$, e.g. from 200 to 900 or from 200 to 600 or from 200 to 550 $m^2/g$ or from 200 to 520 $m^2/g$; more preferably at least 250 $m^2/g$, e.g. from 250 to 900 or from 250 to 600 or from 250 to 550 or from 250 to 520 $m^2/g$; even more preferably at least 400 $m^2/g$, e.g. from 400 to 900 or from 400 to 600 or from 400 to 550 or from 400 to 520 $m^2/g$; particularly preferably at least 450 $m^2/g$, e.g. from 450 to 900 or from 450 to 600 or from 450 to 550 or from 450 to 520 $m^2/g$; and in particular at least 500 $m^2/g$, e.g. from 500 to 900 or from 500 to 600 or from 500 to 550 or from 500 to 520 $m^2/g$, specifically from 505 to 510 $m^2/g$.

The degree of exfoliation of the graphene material being related to the layer thickness can be monitored by XRD. The presence of the reflection at 2theta = 25 to 30° is originating from the layered structure and thus related to the amount of native graphite. Preferably, the nitrogen-doped graphene of the invention does not reveal a graphite peak related to the stacking and thus unexfoliated material.

The elemental composition as expressed by the ratio of carbon to oxygen atoms (C/O ratio) is related to the degree of chemical reduction of the graphene material. Preferably, in the nitrogen-doped graphene of the invention, the C/O ratio is at least 5:1, more preferably at least 50:1, even more preferably at least 100:1, and in particular at least 500:1.

In a particular embodiment, the nitrogen-doped graphene according to the invention may further contain Fe and/or Co and optionally also at least one metal selected from Mn, Ni, V, Cr, Ti, Cu, Pt, Pd and Ru or any alloy thereof.

If the nitrogen-doped graphene contains Fe, this is preferably present as Fe, $Fe_2O_3$, $Fe_3O_4$, $Fe(OH)_2$, $Fe(OH)_3$ and/or FeOOH, more preferably as Fe, $Fe_2O_3$ and/or $Fe_3O_4$, even more preferably as $Fe_2O_3$ and/or $Fe_3O_4$, and in particular as $Fe_2O_3$. If the nitrogen-doped graphene contains Co, this is preferably present as Co, $Co(OH)_2$, $Co_3O_4$ and/or CoO and in particular as $Co_3O_4$.

Preferably, Fe and/or Co is contained in an overall amount of from 1 to 15%, more preferably from 2 to 15%, even more preferably from 4 to 10%, in particular 4 to 6% and specifically approximately 5% by weight, based on the overall weight of the Fe- and/or Co-containing nitrogen-doped graphene.

The optionally present metals, preferably Pt and Pd, in particular Pt, may be present in form of alloys, for example as Pt or Pd alloys, preferably Pt or Pd alloys known in the art. Preferred alloys comprise at least one metal from the platinum group (of the periodic table of elements). Preferably, said alloys are selected from the group consisting of PtNi, PtFe, PtV, PtCr, PtTi, PtCu, PtPd, PtRu, PdNi, PdFe, PdCr, PdTi, PdCu and PdRu and ternary alloys containing

Pt or Pd and two of the listed further metals (Ni, Fe, V, Cr, Ti, Cu, Ru) or containing Pt and Pd and one of the listed further metals (Ni, Fe, V, Cr, Ti, Cu, Ru). More preferably, said alloys are selected from the group consisting of PtNi, PtFe, PtV, PtCr, PtTi, PtCu, PtPd and PtRu. Further details in respect of the starting materials or the oxidation states of the listed metals such as Fe, Co, Ni or Pt are described below in connection with the method of the invention.

Among the above optionally present metals, preference is given to Cu, Pt and Pd and their alloys, more preference to Pt and Pd and their alloys and especially to Pt and its alloys.

If the nitrogen-doped graphene according to the invention further comprises at least one metal selected from Mn, Ni, V, Cr, Ti, Cu, Pt, Pd and Ru or any alloy thereof, this at least one metal or alloy is contained in an amount of from 0.05 to 5%, preferably 0.1 to 1% by weight, based on the overall weight of the nitrogen-doped graphene (including any Fe and/or Co and any further metal/alloy contained).

The nitrogen-doped graphene according to the invention further comprising Fe and/or Co and optionally also at least one metal selected from Mn, Ni, V, Cr, Ti, Cu, Pt, Pd and Ru or any alloy thereof preferably comprises Fe.

Preferably, Fe is contained in an amount of from 1 to 10%, preferably 4 to 6% by weight, based on the overall weight of the Fe-containing nitrogen-doped graphene.

Preferably, Fe, Co and/or any optionally present metal or alloys thereof are present as small particles, in particular as nanoparticles. "Nanoparticles" denotes particles with at most 1000 nm in their largest extension (e.g. a diameter of at most 1000 nm in case of circular particles, a transverse diameter of at most 1000 nm in elliptic particles etc.).

More preferably, Fe, Co and/or any optionally present metal or alloys thereof are present as nanoparticles with >0 to 100 nm, even more preferably >0 to 20 nm, particularly preferably 1 to 20 nm and specifically 2 to 10 nm in their largest extension.

In an alternative particular embodiment, the nitrogen-doped graphene according to the invention may further contain at least one metal selected from Mn, Ni, V, Cr, Ti, Cu, Pt, Pd and Ru or any alloy thereof and optionally also Fe and/or Co.

Like in the particular embodiment above, the here mandatorily present metals, preferably Pt and Pd, in particular Pt, may be present in form of alloys, for example as Pt or Pd alloys, preferably Pt or Pd alloys known in the art. Preferred alloys comprise at least one metal from the platinum group (of the periodic table of elements). Preferably, said alloys are selected from the group consisting of PtNi, PtFe, PtV, PtCr, PtTi, PtCu, PtPd, PtRu, PdNi, PdFe, PdCr, PdTi, PdCu and PdRu and ternary alloys containing Pt or Pd and two of the listed further metals (Ni, Fe, V, Cr, Ti, Cu, Ru) or containing Pt and Pd and one of the listed further metals (Ni, Fe, V, Cr, Ti, Cu, Ru). More preferably, said alloys are selected from the group consisting of PtNi, PtFe, PtV, PtCr, PtTi, PtCu, PtPd and PtRu. Further details in respect of the starting materials or the oxidation states of the listed metals such as Fe, Co, Ni or Pt are described below in connection with the method of the invention.

The at least one metal selected from Mn, Ni, V, Cr, Ti, Cu, Pt, Pd and Ru or any alloy thereof is contained in an amount of from 0.05 to 10%, preferably 0.1 to 6% by weight, based on the overall weight of the nitrogen-doped graphene (including any metal/alloy contained).

The optionally present Fe is preferably present as Fe, $Fe_2O_3$, $Fe_3O_4$, $Fe(OH)_2$, $Fe(OH)_3$ and/or FeOOH, more preferably as Fe, $Fe_2O_3$ and/or $Fe_3O_4$, even more preferably as $Fe_2O_3$ and/or $Fe_3O_4$, and in particular as $Fe_2O_3$. The optionally present Co is preferably present as Co, $Co(OH)_2$, $Co_3O_4$ and/or CoO and in particular as $Co_3O_4$.

Likewise preferably, Mn, Ni, V, Cr, Ti, Cu, Pt, Pd and/or Ru and/or any alloy thereof and/or any optionally present Fe and/or Co are present as small particles, in particular as nanoparticles. "Nanoparticles" denotes particles with at most 1000 nm in their largest extension (e.g. a diameter of at most 1000 nm in case of circular particles, a transverse diameter of at most 1000 nm in elliptic particles etc.). More preferably, Fe, Co and/or any optionally present metal or alloys thereof are present as nanoparticles with >0 to 100 nm, even more preferably >0 to 20 nm, particularly preferably 1 to 20 nm and specifically 2 to 10 nm in their largest extension.

Among the above mandatorily present metals, preference is given to Cu, Pt and Pd and their alloys, more preference to Pt and Pd and their alloys and especially to Pt and its alloys.

A further aspect of the present invention relates to a process for preparing nitrogen-doped graphene, comprising the following steps:

(i) treating graphene oxide with a nitrogen-containing compound selected from cyanamide, dicyandiamide, melamine, melam, melem, melon, urea, ethylene diamine, ammonia, mixtures of these compounds with each other and mixtures of these compounds with barbituric acid, cyanuric acid and/or cyanuric chloride; and (ii) heating the resulting mixture.

Graphene oxide used in step (i) is principally known to a person skilled in the art. Preferably, graphene oxide is employed as a dispersion, more preferably as an aqueous dispersion. Graphene oxide is preferably obtained from graphite. Preferably, graphene oxide is obtained by a process in which graphite, preferably graphite flakes, is oxidized into graphite oxide, which in turn is delaminated/exfoliated into graphene oxide. Delamination/exfoliation can for example be carried out by ultransonic treatment (ultrasonic horn, ultrasonic bath) or mechanical treatment (milling). It is preferred

to employ graphene oxide flakes, preferably an aqueous dispersion of graphene oxide flakes, wherein the flakes are in the range of hundreds of nanometers to several micrometers in their lateral dimensions.

In a preferred embodiment, graphene oxide is first treated with a surfactant before it is subjected to step (i). Alternatively preferably, graphite oxide is treated with a surfactant before or during it is subjected to the delamination/exfoliation step to yield graphene oxide. This surfactant treatment leads to further exfoliation and results in a well-dispersed state of graphene oxide. The surfactant need not be removed after the treatment because it pyrolizes in the subsequent steps.

Suitable surfactants are surface-active compounds, such as anionic, cationic, nonionic and amphoteric surfactants, block polymers, polyelectrolytes, and mixtures thereof. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Preferably, the surfactant is an anionic surfactant, more preferably an alkali sulfonate. Among these, preference is given to alkali sulfonates of dodecyl- and tridecylbenzenes, such as sodium dodecylbenzene sulfonate.

Preferably, step (i) is carried out in solution or dispersion. If graphene oxide is treated with a surfactant previous to being used in step (i), the treatment and the reaction in step (i) are preferably carried out in the same solvent/dispersant and without intermediate isolation of the treated graphene oxide.

Suitable solvents/dispersants are aqueous, i.e. water or a mixture of water with a solvent miscible therewith, such as an alkanol, e.g. methanol, ethanol, propanol or isopropanol, a diol, such as ethylene glycol or diethylene glycol, a cyclic ether, such as tetrahydrofuran or dioxan, a ketone, such as acetone or ethylmethylketone, an amide, such as dimethylformamide, or a sulfoxide, such as dimethylsulfoxide. Preferably, the solvent/dispersant is water.

The nitrogen-containing compound is preferably selected from cyanamide, dicyandiamide, melamine, melam, melem, melon, urea, diethylamine, mixtures of these compounds with each other and mixtures of these compounds with barbituric acid, cyanuric acid and/or cyanuric chloride. More preferably, the nitrogen-containing compound is selected from cyanamide, dicyandiamide, melamine, melam, melem, melon, urea, mixtures of these compounds with each other and mixtures of these compounds with barbituric acid, cyanuric acid and/or cyanuric chloride. Even more preferably, the nitrogen-containing compound is selected from cyanamide, dicyandiamide, melamine, urea, mixtures of these compounds with each other and mixtures of these compounds with barbituric acid and/or cyanuric acid. Particularly preferably, the nitrogen-containing compound is selected from cyanamide, dicyandiamide, mixtures of cyanamide with barbituric acid and/or cyanuric acid and mixtures of dicyandiamide with barbituric acid and/or cyanuric acid, and in particular from cyanamide and dicyandiamide. Specifically, the nitrogen-containing compound is cyanamide.

The nitrogen-containing compound is preferably used in excess with respect to graphene oxide. Preferably, the nitrogen-containing compound and graphene oxide are used in step (i) in a weight ratio of from 200:1 to 1.5:1, more preferably from 100:1 to 2:1, even more preferably from 50:1 to 5:1, particularly preferably from 30:1 to 10:1, in particular from 25:1 to 15:1 and specifically approximately 20:1.

In step (ii), the mixture obtained in step (i) is heated.

Preferably, step (ii) is carried out by

(ii.1) removing the solvent or dispersant from the mixture obtained in step (i) (of course only if step (i) was carried out in a solvent/dispersant);

(ii.2) heating the solid obtained in step (ii.1) to 450 to 650°C; and

(ii.3) heating the solid obtained in step (ii.2) to 700 to 1100°C.

In step (ii.1), the solvent/dispersant is preferably removed completely, so that a solid is obtained. The removal of the solvent/dispersant can be carried out by heating and/or under reduced pressure or by spray drying or freeze drying.

The solid obtained is then subjected to an annealing treatment in step (ii.2). This step is preferably carried out under an inert atmosphere, such as argon or nitrogen.

Preferably, in step (ii.2), the solid is heated to 500 to 600°C, more preferably to 520 to 580°C and in particular to 540 to 560°C, e.g. to about 550°C.

The reaction period of step (ii.2) depends on various factors, such as the scheduled quantity of product to be reacted and the applied temperature. Preferably, heating carried out for 1 to 10 hours, more preferably for 2 to 8 hours and in particular for 3 to 5 hours.

Preferably, in step (ii.3), the solid is heated to 750 to 1050°C, in particular to 800 to 1000°C and specifically to about 900°C (900±10°C or 900±5°C).

Also the reaction period of step (ii.3) depends on various factors, such as the scheduled quantity of product to be reacted and the applied temperature. Preferably, heating carried out for 30 to 360 minutes, more preferably for 30 to 180 minutes and in particular for 30 to 90 minutes.

Without wishing to be bound by theory, it is assumed that the heat treatment in step (ii) and more specifically in step (ii.2) leads to the reduction of graphene oxide and yields a composite of graphene and the nitrogen-containing compound or, rather, a conversion/polymerization product of the latter, such as carbon nitride. In case of cyanamide, it is supposed that this dimerizes thermally to dicyandiamide [$(NH_2)_2C{=}N{-}C{\equiv}N$], which then forms melamine in a cyclization reaction. Melamine in turn oligomerizes to one or more of its oligomers, such as melam, melem or melon. These polymerize further to give carbon nitride ($C_3N_4$), which forms a composite with graphene. It is of course also possible that the one or other intermediate step is skipped, for instance that cyanamide reacts directly to melamine.

It is assumed that by further heating, such as in the further heat treatment step (ii.3), the composite of graphene and carbon nitride reacts to nitrogen-doped graphene by thermal decomposition of carbon nitride and incorporation of the nitrogen atoms into the graphene lattice.

The invention also relates to a process for preparing nitrogen-doped graphene which further comprises Fe and/or Co and optionally also at least one metal selected from Mn, Ni, V, Cr, Ti, Cu, Pt, Pd and Ru, comprising the following steps:

(a) treating graphene oxide with a nitrogen-containing compound selected from cyanamide, dicyandiamide, melamine, melam, melem, melon, urea, ethylene diamine, ammonia, mixtures of these compounds with each other and mixtures of these compounds with barbituric acid, cyanuric acid and/or cyanuric chloride, where step (a) is carried out in solution or dispersion;

(b) removing the solvent or dispersant from the mixture obtained in step (a);

(c) heating the solid obtained in step (b) to 450 to 650°C;

(d) adding Fe or and/or an Fe compound and/or Co and/or a Co compound and optionally also at least one metal selected from Mn, Ni, V, Cr, Ti, Cu, Pt, Pd, Ru or any alloy thereof or a compound thereof to the product obtained in step (c); and

(e) heating the product obtained in step (d) to 700 to 1100°C.

The remarks made above with respect to steps (i), (ii.1), (ii.2) and (ii.3) apply to steps (a), (b), (c) and (e), respectively.

Accordingly, graphene oxide used in step (a) is principally known to a person skilled in the art. Preferably, graphene oxide is employed as a dispersion, more preferably as an aqueous dispersion. Graphene oxide is preferably obtained from graphite. Preferably, graphene oxide is obtained by a process in which graphite, preferably graphite flakes, is oxidized into graphite oxide, which in turn is delaminated/exfoliated into graphene oxide. Delamination/exfoliation can for example be carried out by ultrasonic treatment (ultrasonic horn, ultrasonic bath) or mechanical treatment (milling). It is preferred to employ graphene oxide flakes, preferably an aqueous dispersion of graphene oxide flakes, wherein the flakes are in the range of hundreds of nanometers to several micrometers in their lateral dimensions.

Likewise, in a preferred embodiment, graphene oxide is first treated with a surfactant before it is subjected to step (a). Alternatively preferably, graphite oxide is treated with a surfactant before or during it is subjected to the delamination/exfoliation step to yield graphene oxide. This surfactant treatment leads to further exfoliation and results in a well-dispersed state of graphene oxide. Suitable and preferred surfactants are listed above.

Suitable and preferred solvents/dispersants for step (a) are listed above in connection with step (i).

The nitrogen-containing compound is preferably selected from cyanamide, dicyandiamide, melamine, melam, melem, melon, urea, diethylamine, mixtures of these compounds with each other and mixtures of these compounds with barbituric acid, cyanuric acid and/or cyanuric chloride. More preferably, the nitrogen-containing compound is selected from cyanamide, dicyandiamide, melamine, melam, melem, melon, urea, mixtures of these compounds with each other and mixtures of these compounds with barbituric acid, cyanuric acid and/or cyanuric chloride. Even more preferably, the nitrogen-containing compound is selected from cyanamide, dicyandiamide, melamine, urea, mixtures of these compounds with each other and mixtures of these compounds with barbituric acid and/or cyanuric acid. Particularly preferably, the nitrogen-containing compound is selected from cyanamide, dicyandiamide, mixtures of cyanamide with barbituric acid and/or cyanuric acid and mixtures of dicyandiamide with barbituric acid and/or cyanuric acid, and in particular from cyanamide and dicyandiamide. Specifically, the nitrogen-containing compound is cyanamide.

The nitrogen-containing compound is preferably used in excess with respect to graphene oxide. Preferably, the nitrogen-containing compound and graphene oxide are used in step (i) in a weight ratio of from 200:1 to 1.5:1, more preferably from 100:1 to 2:1, even more preferably from 50:1 to 5:1, particularly preferably from 30:1 to 10:1, in particular from 25:1 to 15:1 and specifically approximately 20:1.

In step (b), the solvent/dispersant is preferably removed completely, so that a solid is obtained. The removal of the solvent/dispersant can be carried out by heating and/or under reduced pressure or by spray drying or freeze drying.

The solid obtained is then subjected to an annealing treatment in step (c). This step is preferably carried out under an inert atmosphere, such as argon or nitrogen.

Preferably, in step (c), the solid is heated to 500 to 600°C, more preferably to 520 to 580°C and in particular to 540 to 560°C, e.g. to about 550°C.

The reaction period of step (c) depends on various factors, such as the scheduled quantity of product to be reacted and the applied temperature. Preferably, heating carried out for 1 to 10 hours, more preferably for 2 to 8 hours and in particular for 3 to 5 hours.

Preferably, in step (e), the solid is heated to 750 to 1050°C, in particular to 800 to 1000°C and specifically to about 900°C.

Also the reaction period of step (e) depends on various factors, such as the scheduled quantity of product to be reacted and the applied temperature. Preferably, heating carried out for 30 to 360 minutes, more preferably for 30 to 180 minutes and in particular for 30 to 90 minutes.

Without wishing to be bound by theory, it is assumed that this heat treatment in step (c) leads to the reduction of graphene oxide and yields a composite of graphene and the nitrogen-containing compound or, rather, a conversion/polymerization product of the latter, such as carbon nitride. For further details, reference is made to the above comments to step (ii) and (ii.2). It is assumed that by further heating, such as in the further heat treatment step (e), the composite of graphene and carbon nitride reacts to nitrogen-doped graphene by thermal decomposition of carbon nitride and incorporation of the nitrogen atoms into the graphene lattice.

As regards step (d), it has to be understood that the addition of one or more metals can be carried out before, during or after the addition of the nitrogen-containing compound; i.e. step (d) is not necessarily carried out between steps (c) and (e), as insinuated in the above reaction sequence. To be more precise, step (d) can be carried out before or during step (a), between steps (a) and (b), between steps (b) and (c) or between steps (c) and (e). If more than one metal is added, these two or more metals can be added simultaneously or subsequently, and during the same or different reaction steps. Preferably however, step (d) is carried out between steps (c) and (e), i.e. in the order indicated above.

In step (d), the metals can be employed, for example, in pure form (alloys or metals as such having an oxidation number of +/- 0), or they can be employed as a salt or oxide, for example as $FeCl_2$, $FeCl_3$, $Fe_2O_3$, $Fe_3O_4$, $Fe(OH)_2$, $Fe(OH)_3$ or FeOOH in the case of Fe, and as $Co(OH)_2$, $Co_3O_4$ or CoO in the case of Co. In case the respective metals are employed as alloys, reference is made to WO 2010/026046 or WO 2011/095943, wherein alloys and methods for producing them are described.

In step (d), Fe is preferably employed as Fe, $FeCl_3$, $Fe_2O_3$, $Fe_3O_4$, $Fe(OH)_2$, $Fe(OH)_3$ or FeOOH, and specifically as $FeCl_3$. Co is preferably employed as Co, $Co(OH)_2$, $Co_3O_4$ or CoO.

Preferably, Fe, Co and/or any optionally present metal or their alloys or their compounds are employed as small particles, preferably as nanoparticles. As to the definition of nanoparticles, reference is made to the above remarks.

After the above steps (ii) or (e), nitrogen-doped graphene can be isolated. Methods for the isolation of doped graphene oxide are known in the art and can be applied to the nitrogen-doped graphene of the present invention. For instance, the solvent used can be removed, e.g. by heating and/or by applying reduced pressure, or by freeze drying or spray drying.

The invention further relates to nitrogen-doped graphene, obtainable by the processes described above.

The invention further relates to the use of nitrogen-doped graphene according to the invention for producing an aerogel, an electrode, a battery, a supercapacitor, preferably an all solid state supercapacitor, or a catalyst, preferably an electrocatalyst for oxygen reduction reactions.

The invention further relates to an aerogel based the nitrogen-doped graphene of the invention.

Aerogels are a synthetic porous material derived from a gel, in which the liquid component of the gel has been replaced with a gas. Despite their name, aerogels are solid and rigid, dry materials and do not resemble a gel in their physical properties. In general, they have extremely low density and thermal conductivity. Aerogels are generally produced by extracting the liquid component of a gel through supercritical drying. This allows the liquid to be slowly drawn off without causing the solid matrix in the gel to collapse from capillary action, as would happen with conventional evaporation.

The aerogel according to the present invention is preferably three-dimensional (3D) and monolithic. This means that the aerogel according to the present invention is preferably based on nitrogen-doped graphene, wherein ultrathin walls of graphene nanosheets are interconnected to build up a 3D-framework. Furthermore, the aerogel according to the present invention has a macroporous structure, more preferably a highly macroporous structure. The size of macropores is ranging from 200 nm to tens of micrometers. The aerogel according to the present invention has preferably at least one parameter selected from a surface area ranging from 200 to 1000 $m^2/g$, an electrical conductivity of 0.1 x $10^{-3}$ to 1 S/cm, a light weight with mass density of 20 to 50 $mg/cm^3$, a compressive strength of 0.02 to 0.08 and/or a compress modulus of 0.1 to 0.5 MPa. More preferably, the aerogel according to the present invention fulfills each of the before-listed parameters.

The aerogel of the invention can be prepared by known methods for preparing aerogels. For instance, step (i) or (a) is carried out in aqueous dispersion in such a way that a hydrogel is formed. The resulting mixture (hydrogel) is then subjected to steps (ii.1) or (b), which are carried out as a freeze drying process. The further steps are carried out as described above.

Advantageously, the aerogel according to the present invention can directly serve as additive and/or binder-free electrodes. The aerogel of the invention shows a better performance as compared to aerogels based on graphene without dopants (undoped graphene aerogel).

The aerogel of the invention or electrodes made thereof (see below) can easily be embedded with an electrolyte such as PVA/$H_2SO_4$-gel. Due to this embedment, aerogel electrodes can be produced in which the respective electrolyte/gel serves as solid electrolyte and separator.

The aerogels of the present invention preferably show a threedimensional (3D) open macroporosity with interconnected network structure, high specific surface area, excellent electrical conductivity, mechanically flexibility and/or light weight. These features render the fully interfacial wettability of electrolyte for rapid ion diffusion in the bulk electrode and fast electron transport in the 3D graphene network.

The invention also relates to the use of the aerogel of the invention as or in electrodes, in batteries, in supercapacitors, preferably in all solid state supercapacitors, or as catalysts, preferably as electrocatalysts for oxygen reduction reactions.

In one preferred embodiment, the electrode is an electrode for fuel cells.

In another preferred embodiment, the electrode is an oxygen consumption electrode, in particular an oxygen consumption electrode for the electrolysis of hydrochloric acid or alkali metal chlorides.

In another preferred embodiment, the electrode is a supercapacitor electrode.

The invention further relates to an electrode comprising nitrogen-doped graphene of the invention and/or an aerogel of the invention.

In one preferred embodiment, the electrode is an electrode for fuel cells.

In another preferred embodiment, the electrode is an oxygen consumption electrode, in particular an oxygen consumption electrode for the electrolysis of hydrochloric acid or alkali metal chlorides.

In another preferred embodiment, the electrode is a supercapacitor electrode.

Fuel cells are electrochemical cells that convert the chemical energy from a fuel into electricity through a chemical reaction with oxygen or another oxidizing agent. Hydrogen is the most common fuel, but hydrocarbons such as natural gas and alcohols like methanol are used, too. Like all electrochemical cells, they comprise an anode, a cathode and an electrolyte that allows charges to move between the two sides of the fuel cell. Electrons are drawn from the anode to the cathode through an external circuit, producing direct current electricity. The electrode of the invention is used as the cathode in a fuel cell.

In a preferred embodiment, the electrode of the invention is used in a fuel cell which is operated under acidic conditions. Accordingly, in a preferred embodiment, the nitrogen-doped graphene according to the invention is used in or for producing an electrode or in or for producing an aerogel which in turn is/are used in a fuel cell which is operated under acidic conditions. "Acidic conditions" means a pH below 7, such as, for example, from 0 to 6 or from 1 to 5, and includes also superacidic conditions (below pH 0).

In an alternatively preferred embodiment, the electrode of the invention is used in a fuel cell which is operated under alkaline conditions. Accordingly, in a preferred embodiment, the nitrogen-doped graphene according to the invention is used in or for producing an electrode or in or for producing an aerogel which in turn is/are used in a fuel cell which is operated under alkaline conditions. "Alkaline conditions" means a pH above 7, such as, for example, from 8 to 14 or from 9 to 13, and includes also superalkaline conditions (above pH 14).

Oxygen consumption electrodes (or oxygen depolarized cathodes) are electrodes at which elementary oxygen is reduced. They are for example used in the electrolysis of hydrochloric acid or alkali metal chlorides. Electrolysis of HCl or alkali metal chlorides is typically used for producing chlorine and serves at the same time for recycling HCl which forms for example in numerous industrial processes using chlorine. Using oxygen consumption electrodes instead of "normal" cathodes has several advantages. Thus, due to the high electrophilicity of oxygen which competes successfully with protons (or $H_3O^+$) at the cathode, the formation of hydrogen which represents always a safety problem is avoided. For the same reason, the required current density can be lowered.

In a preferred embodiment, the electrode of the invention is an oxygen consumption electrode which is operated under acidic conditions. Accordingly, in a preferred embodiment, the nitrogen-doped graphene according to the invention is used in or for producing an electrode or in or for producing an aerogel which in turn is/are used as an oxygen consumption electrode which is operated under acidic conditions. "Acidic conditions" means a pH below 7, such as, for example, from 0 to 6 or from 1 to 5, and includes also superacidic conditions (below pH 0).

In an alternatively preferred embodiment, the electrode of the invention is an oxygen consumption electrode which is operated under alkaline conditions. Accordingly, in a preferred embodiment, the nitrogen-doped graphene according to the invention is used in or for producing an electrode or in or for producing an aerogel which in turn is/are used as an oxygen consumption electrode which is operated under alkaline conditions. Alkaline conditions mean a pH above 7, such as, for example, from 8 to 14 or from 9 to 13, and include also superalkaline conditions (above pH 14).

As to supercapacitor electrodes, reference is made to the remarks below.

The electrode of the invention preferably further comprises an electrolyte. This is preferably a PVA/$H_2SO_4$ gel (a gel made of polyvinyl alcohol and $H_2SO_4$), a PVA/$H_3PO_4$ gel (a gel made of polyvinyl alcohol and $H_3PO_4$), a PVA/KOH gel (a gel made of polyvinyl alcohol and KOH), a PVA/NaOH gel (a gel made of polyvinyl alcohol and NaOH), a PVA/$Na_2SO_4$ gel (a gel made of polyvinyl alcohol and $Na_2SO_4$) or a ionic liquid polymer gel. Such gels are known in the art. Ionic liquid polymer gels and methods for producing them are described, for example, in S.M. Zakeeruddin and M. Grätzel, Adv. Fund. Mater. (2009), 19, pages 2187-2202, in particular under section 6.

In case a ionic liquid polymer gel is employed, it is preferred to use at least one ionic liquid of the formula 1-alkyl-3-methylimidazolium halide, wherein alkyl is preferably $C_3$-$C_9$-alkyl and/or the halide is preferably iodide. As polymer or gelator within said ionic liquid polymer gel, it is preferred to use a low molecular weight polymer (gelator), such as poly(vinylidinefluoride-co-hexafluoropropylene).

More preferably, the electrolyte is a PVA/$H_2SO_4$ gel.

In one embodiment of the invention, the electrode of the invention comprises an aerogel. The electrode is preferably obtained by cutting the aerogel of the invention into slices having a thickness of 0.5 to 1.5 mm and/or having a diameter of 5 to 15 mm.

The invention further relates to a catalyst comprising nitrogen-doped graphene of the invention and/or an aerogel of the invention.

Within the context of the present invention the nitrogen-doped graphene and the aerogel of the present invention may directly be employed as catalyst, they may form parts of a catalyst or they may be employed as an intermediate for producing a catalyst based on said nitrogen-doped graphene or said aerogels.

Preferably, the catalyst according to the present invention contains Fe, Co and/or at least one of the above-listed metals or an alloy thereof. More preferably, the catalyst contains Fe and/or Co and even more preferably Fe. Preferably, Fe, Co and/or the other metals listed above or their alloys are present as small particles, more preferably as nanoparticles, e.g. nanoparticles of $Fe_3O_4$ and $Co_3O_4$.

The invention also relates to an all solid state supercapacitor (ASSS) comprising nitrogen-doped graphene of the invention and/or an aerogel of the invention.

Supercapacitors, also called ultracapacitors or electrochemical capacitors, are an important energy storage device that delivers with orders of magnitude higher power density achieved in seconds, cycle efficiency, rates of charge and discharge, and longer cycling life than traditional batteries. Carbon-based electrochemical double layer capacitors have attracted intensive attentions because they can provide ultrahigh power density and excellent cycle life. Due to the high surface area, electrical conductivity, and nanostructures carbons of carbon nanotubes, porous carbon, carbide-derived carbons as well as graphene are widely explored as electrode materials for supercapacitors.

The all solid state supercapacitors (ASSSs) of the present invention show high specific capacitance, good rate capability, enhanced energy density or power density in comparison with, for example, undoped graphene aerogels (GAs) and layer-structured graphene paper (GP).

The present invention is further illustrated by the following figures and examples.

Figures

Figures 1 and 2 show typical SEM (scanning electron microscope) images of CN (polymeric carbon nitride; Fig. 1) and CN-G composite (carbon nitride-graphene composite; Fig. 2). CN without incorporation of graphene sheets shows a typical slate like morphology (Fig. 1), while CN-G becomes crumpled (Fig. 2) due to the adsorbed cyanamide on graphene which undergoes polymerization under thermal treatment.

Figure 3 shows a HRTEM (high resolution transmission electron microscope) image of CN-G. Graphene sheets were not distinctively visible in CN-G due to thick layer of CN adsorbed on graphene surface

Figure 4 shows a HRTEM (high resolution transmission electron microscope) image of nitrogen-doped graphene NG-900 (for the definition of NG-900, see example 1) which demonstrates transparent graphene sheets without the presence of any residual CN.

Figure 5 shows the XRD (X-ray diffractogram) pattern of nitrogen-doped graphene containing 5% by weight of Fe (see example 3; $NG/Fe_{5.0}$). The diffraction peak at 42.8° is characteristic for Fe (110).

Figures 6 and 7 show HRTEM (high resolution transmission electron microscope) images of nitrogen-doped graphene containing 5% by weight of Fe (see example 3; $NG/Fe_{5.0}$), displaying the presence of small-sized crystalline Fe nanoparticles on NG with a size of 2-4 nm, and a lattice d-spacing of - 0.23nm which is slightly higher than the standard value of 0.203 nm (JCPDS database).

Figure 8 shows the energy dispersive spectrum (EDX) of nitrogen-doped graphene containing 5% by weight of Fe (see example 3; $NG/Fe_{5.0}$) validating the presence of N and Fe. The presence of the Cu peak is due to the used TEM grid containing copper.

Figure 9 shows the cyclic voltammogram of nitrogen-doped graphene NG-900 (for the definition of NG-900, see example 1) in argon- or oxygen-saturated 0.1 M KOH solution, as well as oxygen-saturated 0.1 M KOH solution with 3 M $CH_3OH$ for investigating a possible cross over effect of NG-900 against the electrooxidation of methanol.

Figure 10 shows the cyclic voltammogram of Pt/C in argon- or oxygen-saturated 0.1 M KOH solution, as well as oxygen-saturated 0.1 M KOH solution with 3 M $CH_3OH$ for investigating a possible cross over effect of Pt/C against the electrooxidation of methanol.

Figure 11 shows the steady state voltammograms for nitrogen-doped graphenes NG-800, NG-900 and NG-1000 as well as rGO and Pt/C (for the definition of NG 800, NG-900, NG-1000 and rGO, see example 1) loaded on a glassy carbon electrode in oxygen-saturated 0.1 M KOH.

Figure 12 shows the Koutckey-Levich plot of $J^{-1}$ vs. $\omega^{-1/2}$ at a potential of -0.50 V on NG-900 electrode. It exhibits good linearity.

Figure 13 shows the cyclic voltammogram of $NG/Fe_{5.0}$ in oxygen- and argon-saturated 0.1 M KOH, as well as oxygen-saturated 0.1 M KOH solution with 3 M $CH_3OH$.

Figure 14 shows the RRDE polarization curves of $NG/Fe_{2.0}$, $NG/Fe_{5.0}$, $NG/Fe_{10.0}$ and $NG/Fe1_{5.0}$ composites supported on a glassy carbon electrode in $O_2$ saturated 0.1 M KOH.

Figure 15 to 17 show the cyclic voltammogram for the ORR at (figure 15) Pt/C, (figure 16) NG-900 and (figure 17) $NG/Fe_{5.0}$ electrode in $O_2$-saturated 0.1M KOH and (figure 18) $NG/Fe_{5.0}$ electrode in $O_2$-saturated 0.5M $H_2SO_4$ before and after a continuous potentiodynamic swept for 10,000 cycles at room temperature and at a scan rate of 100 $mVs^{-1}$. The wave like bands over -1.0 to -0.5 V seen for the pristine Pt/C electrode are attributed to hydrogen adsorption/desorption.

Examples

Characterization:

The morphology and microstructures of the samples were investigated by HRTEM (high resolution transmission electron microscopy; Philips Tecnai F20), TGA (thermogravimetric analysis; Mettler TG 50), and XRD (X-ray diffraction; Bruker D4 X-ray scattering system with Ni-filtered Cu K$\alpha$ radiation). Raman spectra were recorded with a Bruker RFS

100/S spectrometer. Nitrogen sorption isotherms and BET surface areas were measured at 77K with a Micrometrics Tristar 3000 analyser (USA). The chemical composition was analysed by XPS (X-ray photoelectron spectroscopy; Omicron Multiprobe spectrometer using Al $K\alpha$ radiation). For these measurements, the samples were ultrasonicated in ethanol and then casted and dried at ambient conditions on Au substrates (30 nm Au films thermally evaporated on Cr-primed Si wafers, Georg Albert PVD coatings). XPS binding energies were referenced to the Au $4f_{7/2}$ peak (84.0 eV). Elemental chemical ratios were calculated from areas of the XP peaks assuming the homogeneous distribution of elements and normalizing these areas by Scofield sensitivity factors and electron attenuations lengths evaluated from the Laibinis expression. For the analysis of N1s spectra, a Shirley background subtraction procedure was employed and symmetric Voigt functions (90% Gaussian character) were used for fitting. All fits were self-consistent.

Electrocatalytic activity:

The ORR activity and four-electron sensitivity of the samples were evaluated using a rotating disk electrode (RDE) and a rotating ring disk electrode (RRDE). RDE/RDDE measurements were performed using CHI Electrochemical Station (Model 760D) in a conventional three-electrode electrochemical cell. Platinum wire and Ag/AgCl, KCl (3M) electrode were used as the counter and the reference electrode, respectively. The preparation of glassy carbon working electrode (5 mm in diameter) was as follows: 1 mg of the NG sample was dissolved in 1 ml of a solvent mixture of Nafion (5% by weight) and water (v/v ratio: 1:9) by sonication. For comparison, a commercially available catalyst of 30% by weight Pt supported on black carbon (fuel cell grade) was used and 1 mg/ml Pt/C suspension was also prepared according to the same procedure described above. The electrodes were allowed to dry at room temperature before measurement. This leads to a catalyst (NG samples or Pt/C) loading of 50.91 $\mu g\ cm^{-2}$. The RRDE experiments were carried out in $O_2$ saturated 0.1 M KOH solution for the oxygen reduction reaction. The potential was varied from +0.2 to -1.2 V at a potential sweep of $10mVs^{-1}$ and the ring potential was set at 0.5 V. First, the potential range was cyclically scanned between -1.2 and +0.2 V at different scan rate of 100 $mVs^{-1}$ at ambient temperature after purging $O_2$ or Ar gas for 15 min. Then the RRDE experiments were performed. RRDE experiments in acidic conditions were performed in $O_2$-saturated 0.5 M $H_2SO_4$ solution within the potential range of +0.8 to -0.2 V at a potential sweep of 10 $mVs^{-1}$ and the ring potential was set at 1.0 V.

1. Preparation of nitrogen-doped graphene

100 mg of graphite oxide (prepared from natural graphite flakes using a modified Hummers method, the details of which are described in the publication: William S. Hummers Jr., Richard E. Offeman, Preparation of Graphitic Oxide, J. Am. Chem. Soc., 1958, 80(6), p. 1339) were dispersed in 100 ml of water and 0.1 g of sodium dodecylbenzene sulfonic acid was added to this dispersion. The mixture was sonicated for 30 min. 4 ml of cyanamide solution in water (2 g of cyanamide) were then added dropwise over 5 min. The mixture was stirred continuously and heated to 100°C to remove water. The resulting solid powder was then calcinated in two subsequent steps: First, the solid was heated at a rate of 2°C/min to reach 550°C and tempered at this temperature for 4 h under an Argon flow to trigger the thermal condensation of cyanamide to polymeric carbon nitride (CN). In a second step, the resulting solid carbon nitride-graphene composite, which for simplicity is termed in the following as CN-G, was portioned into three equal parts. One part was heated for 1 h at 800°C, the second part for the same time at 900°C and the third part for the same time at 1000°C to decompose carbon nitride and thereby generate nitrogen-doped graphene (NG). For simplicity, the resulting solids are termed in the following as NG-800 (= nitrogen-doped graphene obtained by heating to 800°C), NG-900 (= nitrogen-doped graphene obtained by heating to 900°C) and NG-1000 (= nitrogen-doped graphene obtained by heating to 1000°C), respectively. For comparison, undoped and reduced GO (rGO) was also prepared by pyrolyzing pure GO under the same process described above processes.

HRTEM of NG samples demonstrated transparent graphene sheets without the presence of any residual CN (see for example figure 4 for NG-900).

Nitrogen content:

XPS analysis of N1s spectra of NG revealed the presence of pyridinic, pyridinic $N^+$-$O^-$ and graphitic nitrogen atoms corresponding to their binding energies of 398.4, 404.0 and 401.0 eV, respectively.

The elemental nitrogen content of NG samples is obtained directly from the XPS measurements. Further calculations of the content of graphitic, pyridinic and pyridinic N+-O- were conducted by deconvoluting the high-resolution N1s peak.

NG-800: 12.0% by weight of N based on the overall weight of the NG-800 (8.2% pyridinic N, 0.3% pyridinic $N^+$-$O^-$, 3.5% graphitic N)

NG-900: 5.0% by weight of N based on the overall weight of the NG-900 (1.72% pyridinic N, 0.74% pyridinic $N^+$-$O^-$,

2.54% graphitic N)
NG-1 000: 4.0% by weight of N based on the overall weight of the NG-1000 (1.54% pyridinic N, 0.9% pyridinic $N^+$-$O^-$, 1.56% graphitic N).

Further characteristics:

Brunauer-Emmett-Teller (BET) surface area of NG-900: 508 $m^2$ $g^{-1}$.
Pore-size distribution of NG-900: centered at about 3.1 nm.
Total pore volume of NG-900: 3.674 $cm^3$ $g^{-1}$
(derived from the adsorption branch of the isotherms based on the Barrett-Joyner-Halenda (BJH) model).

2. Electrocatalytic activity of NG

The electrocatalytic activity of NG sheets for oxygen reduction reaction (ORR) was first examined by cyclic voltammetry (CV) in 0.1 M KOH solution with argon or oxygen at a scan rate of 100 mV $s^{-1}$. As shown in Figure 9, featureless voltammetric currents within the potential range from -1.2 to +0.2 V were observed for NG-900 in argon saturated solution (dotted curve). In contrast, when the electrolyte was saturated with $O_2$, a well-defined cathodic peak centered at -0.16 V was detected, suggesting a pronounced electrocatalytic activity of NG-900 for oxygen reduction. A possible cross over effect of NG-900 and Pt/C against the electrooxidation of methanol in $O_2$ saturated 0.1 M KOH in the presence of methanol (3.0M) was also detected. Apparently, the Pt/C shows a pair of peaks at -0.15 V and -0.08 V for methanol oxidation in the CV curve, whereas the cathodic peak for the ORR disappears (Figure 10). In contrast, no noticeable change was seen in the oxygen reduction current on NG-900 under the same experimental conditions (Figure 9), suggesting the high selectivity and good stability of NG-900 for ORR with respect to Pt/C.

To further evaluate the electrocatalytic activity of NG, both rotating ring disk electrodes (RRDE) and rotating disk electrodes (RDE) were employed. Figure 11 shows the steady state voltammograms for NG loaded on a glassy carbon electrode in $O_2$ saturated 0.1M KOH. The corresponding ring current ($I_R$) for the oxidation of hydrogen peroxide ions ($HO_2^-$) was measured with a Pt ring electrode at the potential of 0.50 V. The electron transfer number per oxygen molecule involved in the ORR was calculated to be 3.35, 3.70 and 3.48 on the basis of Eq. 1 (K.P. Gong, F. Du, Z.H. Xia, M. Durstock, L.M. Dai, Science 2009, 323, 760) for the NG-800, NG-900 and NG-1000 electrode at the potential of -0.4 V, respectively.

$$n = 4I_D / (I_D + I_R/N) \qquad \text{(Eq. 1)}$$

where $N$ = 0.36 is the collection efficiency, $I_D$ is the disk current, and $I_R$ is the ring current.

The lower ring current of NG-900 compared to NG-800 and NG-1000 suggests that a lower amount of $HO_2^-$ reached the ring electrode under increasing negative potentials. The onset potential of NG-900 was determined to be -0.03 V, which is close to that identified from CV measurements (-0.04 V, Figure 9). Different from a Pt/C electrode, the NG-900 electrode showed enhanced steady-state diffusion current over a large potential range.

The current density ($J_K$) of NG samples were analyzed by RDE and calculated on the basis of the Koutecky-Levich equations [Eq. 2 to 4] (R.L Liu, D.Q. Wu, X. Feng, K. Müllen, Angew. Chem Int. Ed. 2010, 49, 2565).

$$\frac{1}{J} = \frac{1}{J_L} + \frac{1}{J_K} = \frac{1}{B\omega^{1/2}} + \frac{1}{J_K} \qquad \text{(Eq. 2)}$$

$$B = 0.62nFC_0(D_0)^{2/3}v^{-1/6} \qquad \text{(Eq. 3)}$$

$$J_K = nFkC_0 \qquad \text{(Eq. 4)}$$

where $J$ is the measured current density, $J_K$ and $J_L$ are the kinetic and diffusion limiting current densities, $\omega$ is the angular velocity of the disk ($\omega = 2\pi$ *N, N* is the linear rotation speed), $n$ is the overall number of electrons transferred in the oxygen reduction, $F$ is the Faraday constant (96485 C $mol^{-1}$), $C_0$ is the bulk concentration of $O_2$, v is the kinematic viscosity of

the electrolyte, and *k* is the electron transfer rate constant.

The Koutckey-Levich plot of $J^{-1}$ vs. $\omega^{-1/2}$ at a potential of -0.50 V on NG-900 electrode exhibited good linearity (Figure 12). The calculated $J_K$ value of 6.67 mA $cm^{-2}$ at -0.40 V is much higher than that of Pt/C (4.76 mA $cm^{-2}$ at -0.40 V). In association with the XPS and electrochemical results described for NG-800, NG-900 and NG-1000, a high content of pyridinic-N content among the different nitrogen species does not play a significant role in ORR performance. In contrast, the electrochemical performance follows differences in the content of graphitic-N. Thereby, it can be concluded that a higher content of graphitic-N in NG-900 than NG-800 and NG-1000 is responsible for the high catalytic performance in ORR.

3. Preparation of nitrogen-doped graphene containing also Fe

The preparation was carried out in analogy to example 1, where however the graphene oxide dispersion, after the treatment with SDBS, was not only supplemented with cyanamide, but also with 2, 5, 10 or 15 mg of $FeCl_3$. The final heat treatment was only carried out at 900°C or at 800°C. The below results relate to the product obtained by heating to 900°C, but the product obtained by heating to 800°C has very similar properties.

The Fe content was determined to be 2.0% by weight (NG/$Fe_{2.0}$), 5.0% by weight (NG/$Fe_{5.0}$), 10.0% by weight (NG/$Fe_{10.0}$) and 15% by weight (NG/$Fe_{15.0}$), relative to the overall weight of the Fe-containing nitrogen-doped graphene.

HRTEM showed that the average size of Fe nanoparticles was about 2 to 4 nm and had a lattice d-spacing of ca. 0.23 nm (see figure 6).

The diffraction peak at 42.8° in the XRD pattern is characteristic for Fe (110) (see figure 5).

4. Electrocatalytic activity of NG/$Fe_{5.0}$

The catalytic properties of NG/$Fe_{5.0}$ were first assessed with cyclic voltammetry in 0.1 M KOH solution. The NG/$Fe_{5\cdot 0}$ shows a featureless voltammetric current within the potential range from -1.2 to +0.2 V in Ar-saturated alkaline solution (Figure 13). Saturating the electrolyte with $O_2$ results in a well-defined cathodic peak at - 0.20 V. Similar to NG-900, NG/$Fe_{5.0}$ did not show any change in the oxygen reduction current in $O_2$ saturated alkaline solution in the presence of 3.0 M methanol, making the catalyst very stable against crossover effects. However, two additional peaks were observed at -0.61 and -0.93 V which are associated with the redox reaction of the iron nanoparticles. Figure 14 shows the RRDE polarization curves of NG/$Fe_{5.0}$ composites supported on a glassy carbon electrode in $O_2$ saturated 0.1 M KOH. The electron transfer number of NG/$Fe_{5.0}$ samples was calculated to be 3.91 at the potential of -0.4 V, respectively. Thereby, all samples of NG loaded with Fe nanoparticles in NG indeed greatly enhance the electrochemical performance leading to mainly four electron transfer processes in ORR. Although the onset potential for ORR at NG/$Fe_{5.0}$ electrode was similar (i.e. -0.04 V) to that of Pt/C, the reduction current was significantly higher (Figure 13). The calculated current density ($J_K$) value of NG/$Fe_{5.0}$ is 8.20 mA $cm^{-2}$. It is remarkable to note that NG/$Fe_{5.0}$ affords a current density which is almost two times higher than that of Pt/C (4.76 mA $cm^{-2}$). This suggests that simultaneous incorporation of Fe nanoparticles with NG provides a synergistic coupling between two components which results in an outstanding electrocatalytic performance as compared to that of Pt/C and NG-900.

The stability of NG-900, NG/$Fe_{5.0}$ and Pt/C electrodes toward ORR was examined by continuous potential cycling between +0.2 to -1.2 V in $O_2$ saturated 0.1M KOH for 10,000 cycles (Figure S12). As indicated in Figure 15, the deterioration of the Pt/C electrode resulted in a - 58% drop in current density. In contrast, NG-900 and NG/$Fe_{5.0}$ electrodes showed only a slight decay of current density of - 13% and - 6% at -0.15 V (Figure 16 and 17), respectively and unchanged features in the voltammetric response after the continuous potential cycles. In addition, NG/$Fe_{5.0}$ showed only - 15% decay in the current density (at 0.38 V) in acidic medium (Figure 17). Thereby, both NG-900 and NG/$Fe_{5.0}$ exhibited superior durability over Pt/C based catalysts.

## Claims

1. Nitrogen-doped graphene comprising 3 to 12%, preferably 3.5 to 12%, in particular 4 to 12% by weight of nitrogen, calculated as N, based on the total weight of carbon and nitrogen contained in the nitrogen-doped graphene.

2. Nitrogen-doped graphene as claimed in claim 1, further comprising Fe and/or Co and optionally also at least one metal selected from Mn, Ni, V, Cr, Ti, Cu, Pt, Pd and Ru or any alloy thereof.

3. Nitrogen-doped graphene as claimed in claim 2, wherein Fe is present as Fe, $Fe_2O_3$, $Fe_3O_4$, $Fe(OH)_2$, $Fe(OH)_3$ and/or FeOOH and/or Co is present as Co, $Co(OH)_2$, $Co_3O_4$ and/or CoO.

4. Nitrogen-doped graphene as claimed in any of claims 2 or 3, wherein Fe, Co and/or any optionally present metal are present as small particles, preferably as nanoparticles.

5. Nitrogen-doped graphene as claimed in any of claims 2 to 4, comprising Fe.

6. Nitrogen-doped graphene as claimed in any of claims 2 to 5, comprising 1 to 15%, preferably 4 to 6% by weight Fe, based on the total weight of the Fe-containing nitrogen-doped graphene.

7. Nitrogen-doped graphene as claimed in claim 1, further comprising at least one metal selected from Mn, Ni, V, Cr, Ti, Cu, Pt, Pd and Ru or any alloy thereof and optionally also Fe and/or Co.

8. A process for preparing nitrogen-doped graphene, comprising the following steps:

(i) treating graphene oxide with a nitrogen-containing compound selected from cyanamide, dicyandiamide, melamine, melam, melem, melon, urea, ethylene diamine, ammonia, mixtures of these compounds and mixtures of these compounds with barbituric acid, cyanuric acid and/or cyanuric chloride; and
(ii) heating the resulting mixture.

9. The process as claimed in claim 8, where step (i) is carried out in solution or dispersion.

10. The process as claimed in any of claims 8 or 9, where step (ii) is carried out by
(ii.1) removing the solvent or dispersant from the mixture obtained in step (i);
(ii.2) heating the solid obtained in step (ii.1) to 450 to 650°C; and
(ii.3) heating the solid obtained in step (ii.2) to 700 to 1100°C.

11. A process for preparing nitrogen-doped graphene which further comprises Fe and/or Co and optionally also at least one metal selected from Mn, Ni, V, Cr, Ti, Cu, Pt, Pd and Ru, comprising the following steps:

(a) treating graphene oxide with a nitrogen-containing compound selected from cyanamide, dicyandiamide, melamine, melam, melem, melon, urea, ethylene diamine, ammonia, mixtures of these compounds and mixtures of these compounds with barbituric acid, cyanuric acid and/or cyanuric chloride, where step (a) is carried out in solution or dispersion;
(b) removing the solvent or dispersant from the mixture obtained in step (a);
(c) heating the solid obtained in step (b) to 450 to 650°C;
(d) adding Fe or and/or an Fe compound and/or Co and/or a Co compound and optionally also at least one metal selected from Mn, Ni, V, Cr, Ti, Cu, Pt, Pd, Ru or any alloy thereof or a compound thereof to the product obtained in step (c); and
(e) heating the product obtained in step (d) to 700 to 1100°C.

12. The process as claimed in any of claims 8 to 11, where graphene oxide is first treated with a surfactant before it is subjected to step (i) or (a).

13. The process as claimed in any of claims 8 to 12, where in step (i) or (a), the nitrogen-containing compound is selected from cyanamide, dicyandiamide, mixtures of cyanamide with barbituric acid and/or cyanuric acid and mixtures of dicyandiamide with barbituric acid and/or cyanuric acid, and is in particular cyanamide.

14. The process as claimed in any of claims 10 or 11, where in step (ii.2) or (c), the solid is heated to 500 to 600°C.

15. The process as claimed in any of claims 11 to 14, wherein in step (d) Fe is employed as Fe, $FeCl_3$, $Fe_2O_3$, $Fe_3O_4$, $Fe(OH)_2$, $Fe(OH)_3$ or FeOOH and/or Co is employed as Co, $Co(OH)_2$, $Co_3O_4$ or CoO.

16. The process as claimed in any of claims 11 to 15, wherein Fe, Co and/or any optionally present metal or their alloys or their compounds are employed as small particles, preferably as nanoparticles.

17. Nitrogen-doped graphene, obtainable by a process as claimed in any of claims 8 to 16.

18. The use of nitrogen-doped graphene as claimed in any of claims 1 to 7 and 17 for producing an aerogel, an electrode, a battery, a supercapacitor, preferably an all solid state supercapacitor, or a catalyst, preferably an electrocatalyst

for oxygen reduction reactions.

**19.** An aerogel based on nitrogen-doped graphene as claimed in any of claims 1 to 7 and 17.

**20.** The use of an aerogel as claimed in claim 19 as or in electrodes, in batteries, in supercapacitors, preferably in all solid state supercapacitors, or as catalysts, preferably as electrocatalysts for oxygen reduction reactions.

**21.** The use as claimed in any of claims 18 or 20, where the electrode is an electrode for fuel cells, preferably for fuel cells operating under acidic conditions, or, alternatively preferably, for fuel cells operating under alkaline conditions.

**22.** The use as claimed in any of claims 18 or 20, where the electrode is an oxygen consumption electrode, in particular an oxygen consumption electrode for the electrolysis of hydrochloric acid or alkali metal chlorides.

**23.** The use as claimed in any of claims 18 or 20, where the electrode is a supercapacitor electrode.

**24.** An electrode comprising nitrogen-doped graphene as claimed in any of claims 1 to 7 and 17 and/or an aerogel as claimed in claim 19.

**25.** The electrode as claimed in claim 24, further comprising an electrolyte which is preferably a PVA/$H_2SO_4$ gel, a PVA/$H_3PO_4$ gel, a PVA/KOH gel, a PVA/NaOH gel, a PVA/$Na_2SO_4$ gel or an ionic liquid polymer gel.

**26.** The electrode as claimed in any of claims 24 or 25, comprising an aerogel, where the electrode is obtainable by cutting the aerogel into slices having a thickness of 0.5 to 1.5 mm and/or having a diameter of 5 to 15 mm.

**27.** The electrode as claimed in any of claims 24 to 26, where the electrode is an electrode for fuel cells.

**28.** The electrode as claimed in any of claims 24 to 26, where the electrode is an oxygen consumption electrode, in particular an oxygen consumption electrode for the electrolysis of hydrochloric acid or alkali metal chlorides.

**29.** The electrode as claimed in any of claims 24 to 26, where the electrode is a supercapacitor electrode.

**30.** A catalyst comprising nitrogen-doped graphene as claimed in any of claims 1 to 7 and 17 and/or an aerogel as claimed in claim 19.

**31.** An all solid state supercapacitor (ASSS) comprising nitrogen-doped graphene as claimed in any of claims 1 to 7 and 17 and/or an aerogel as claimed in claim 19 and/or an electrode as claimed in any of claims 24 to 29.

Figure 1

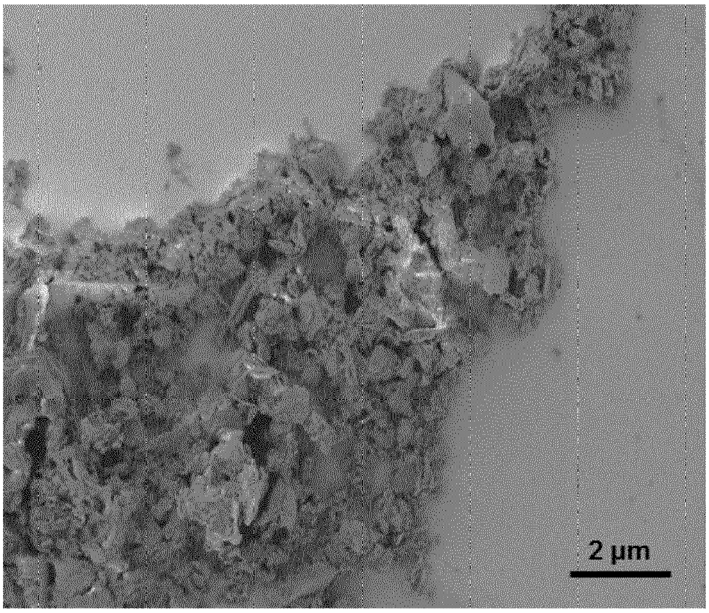


Figure 2

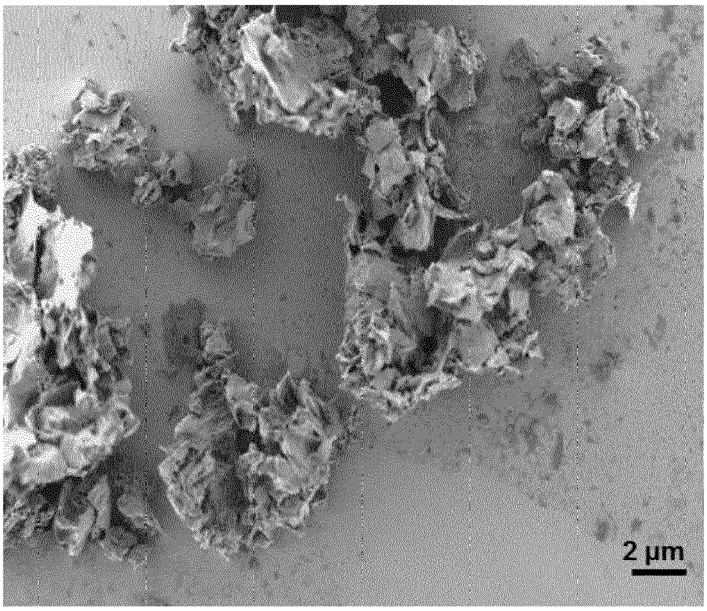

Figure 3

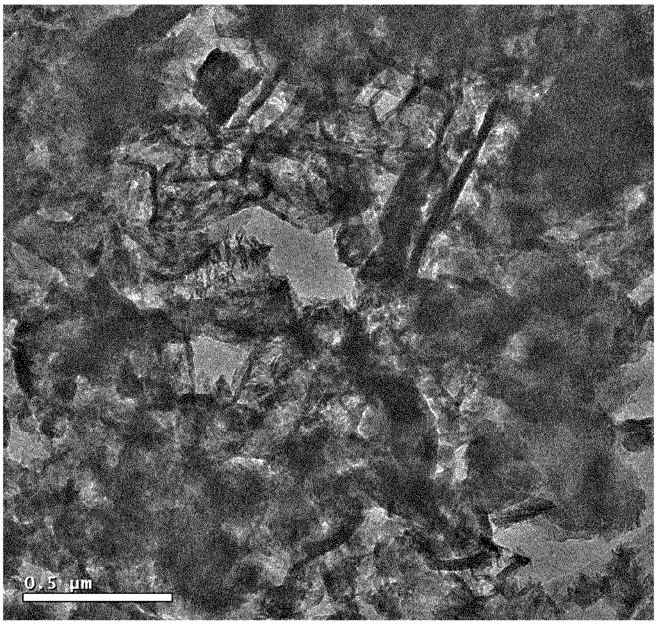


Figure 4

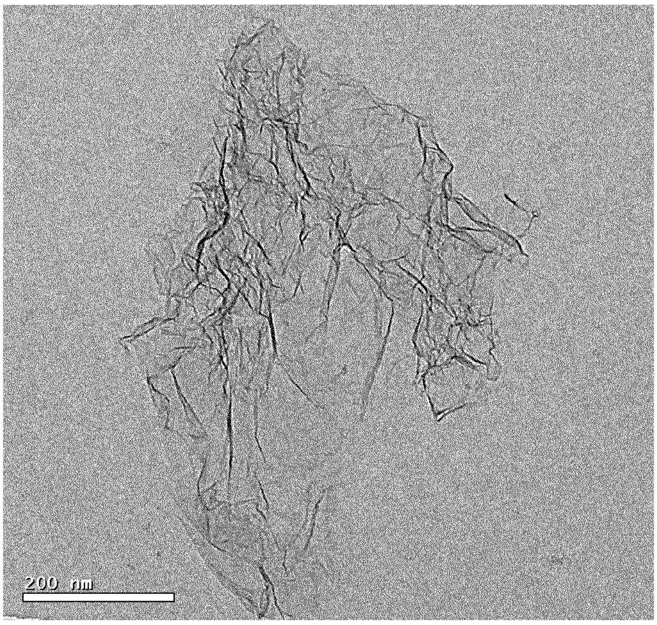

Figure 5

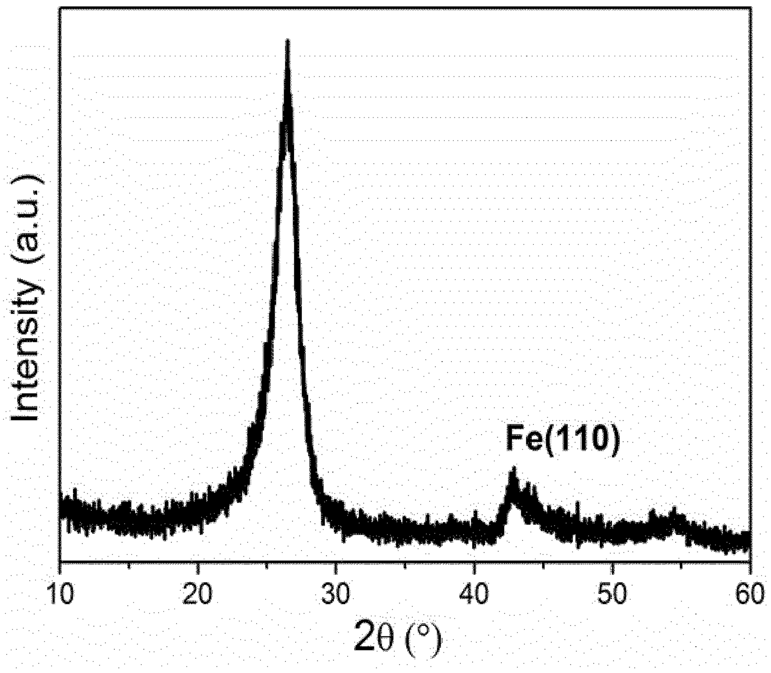


Figure 6

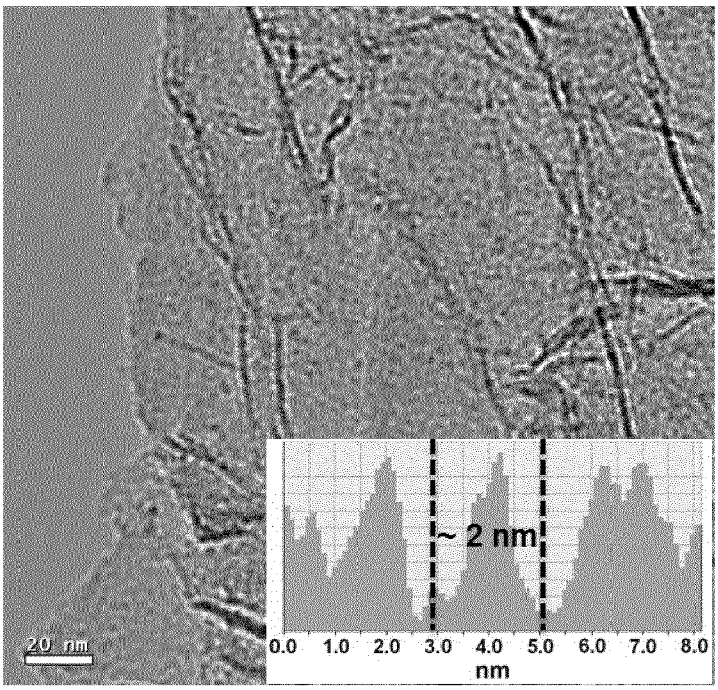

Figure 7

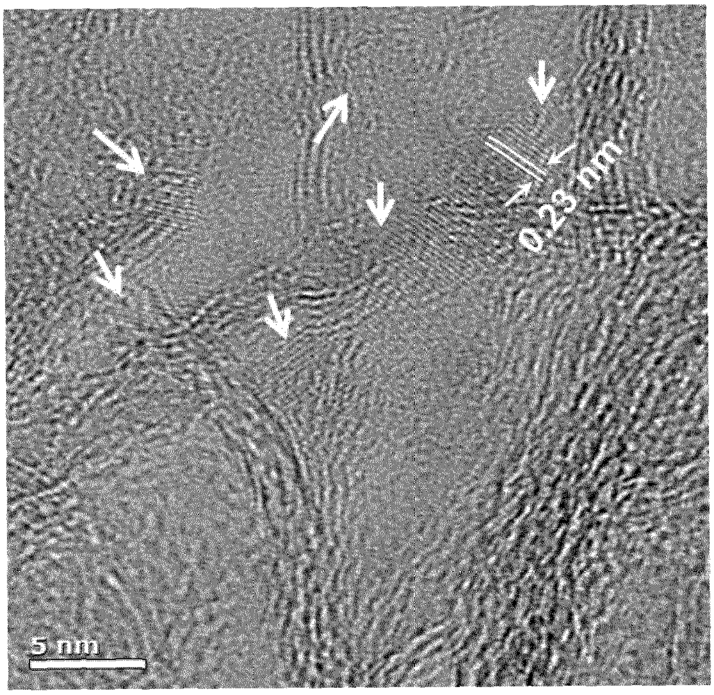


Figure 8

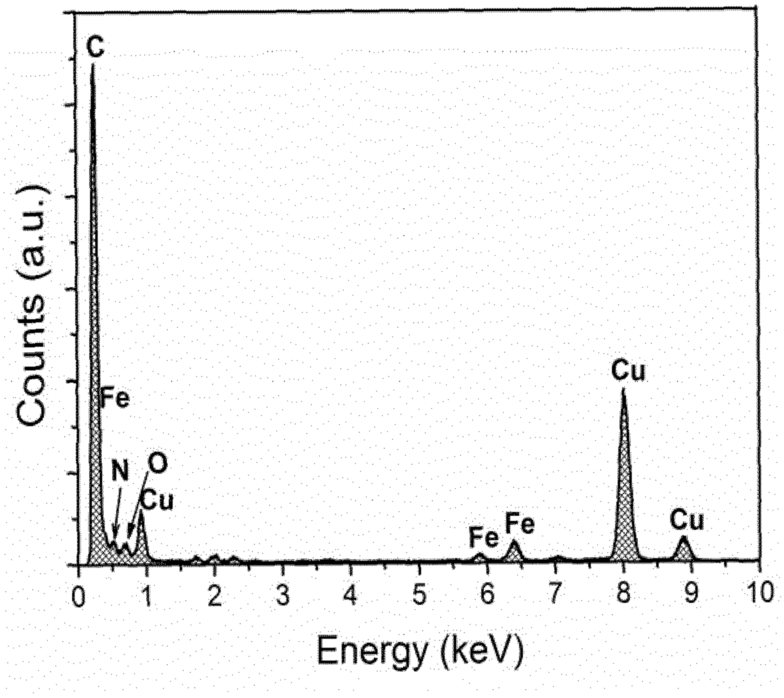

Figure 9

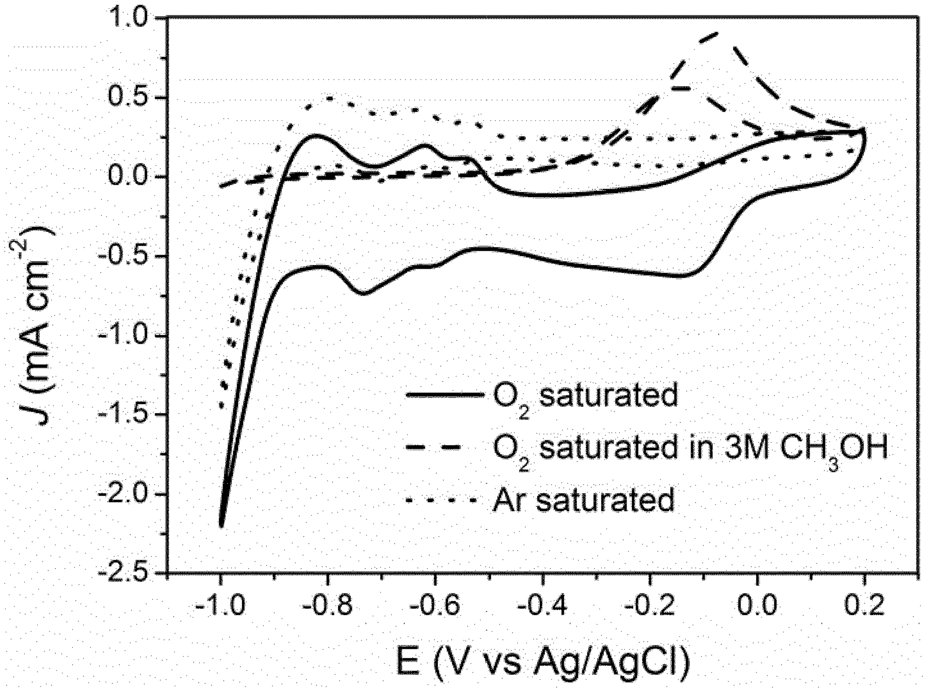


Figure 10

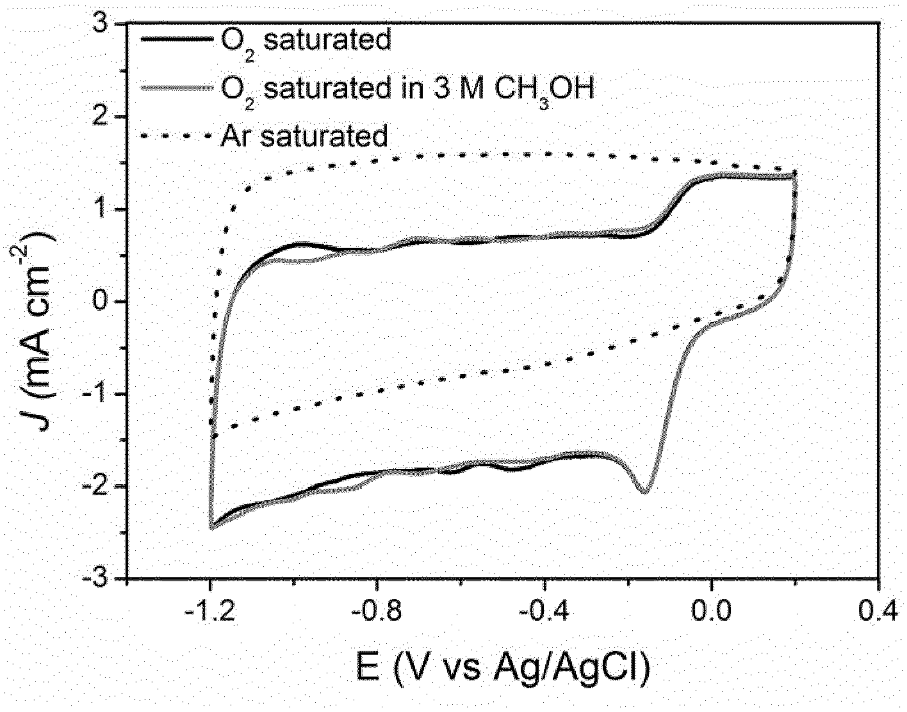

Figure 11

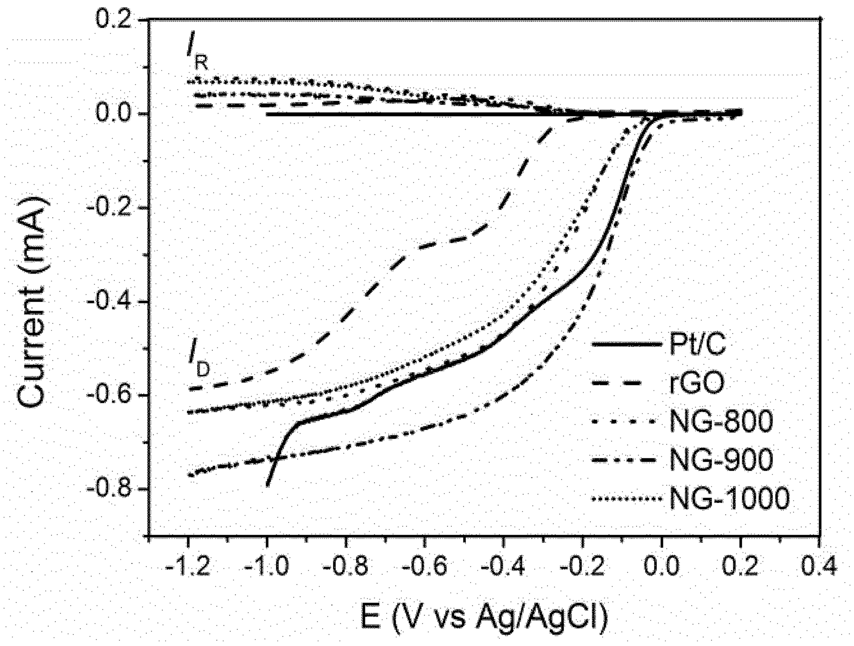


Figure 12

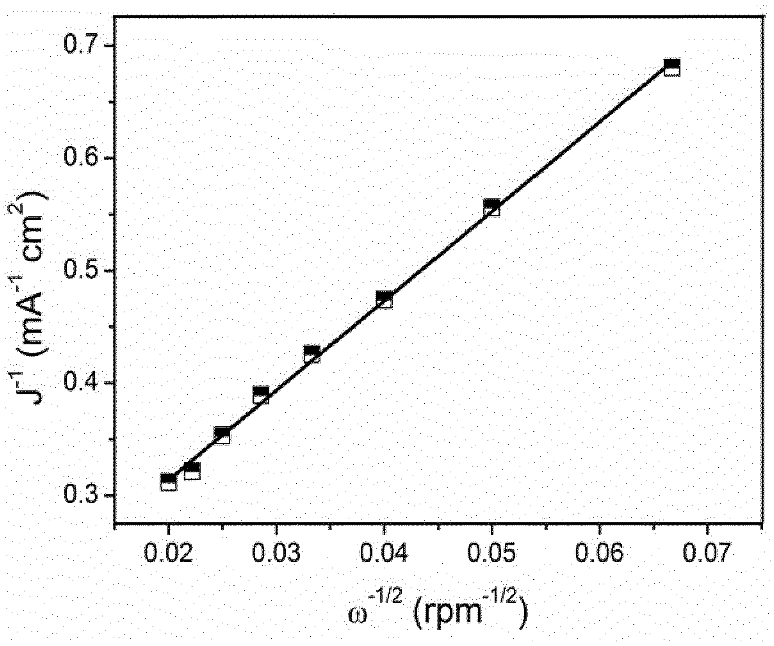

Figure 13

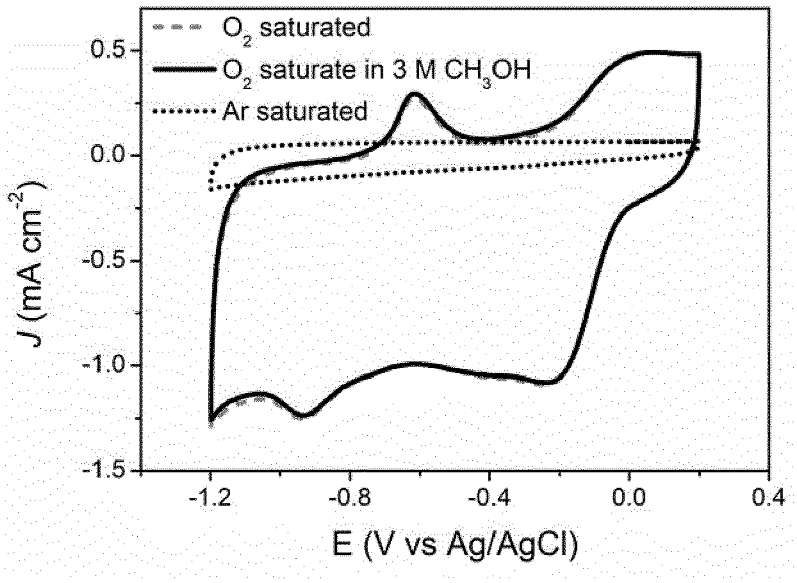


Figure 14

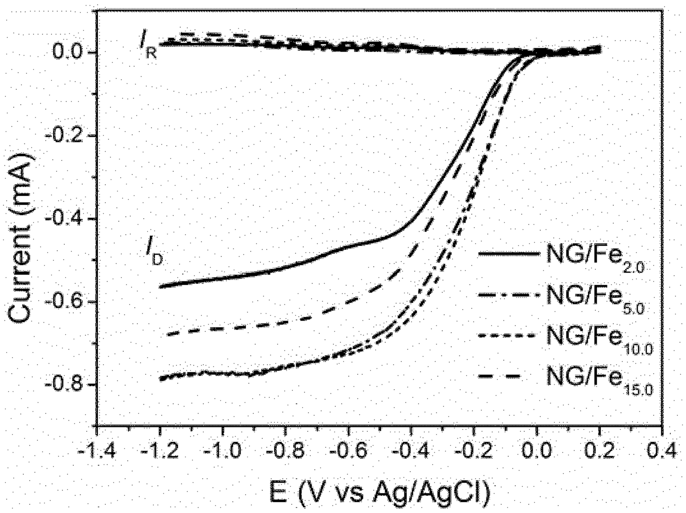

Figure 15

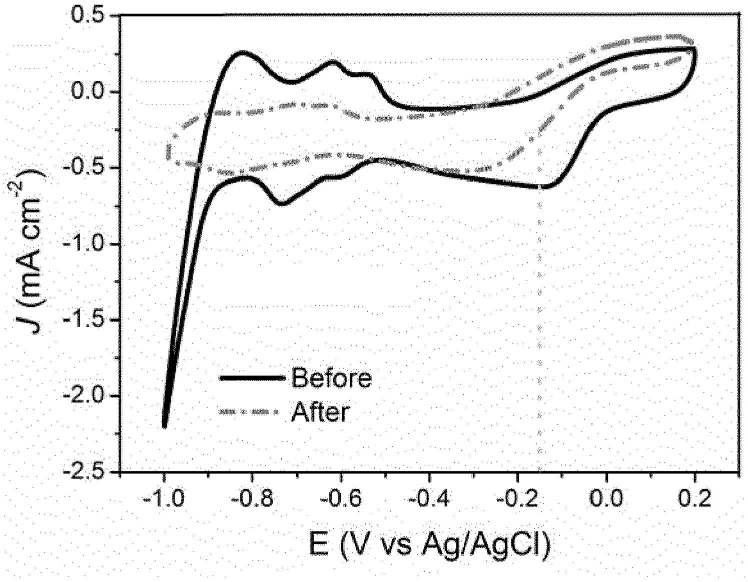


Figure 16

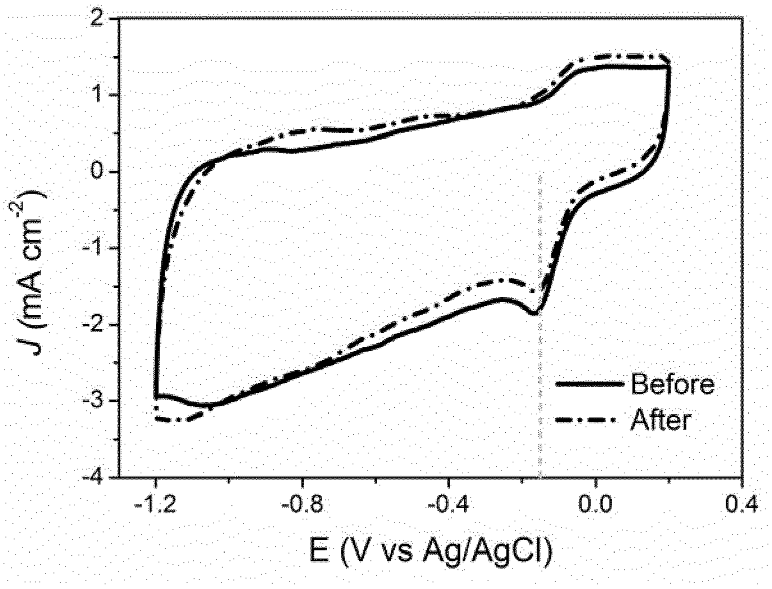

Figure 17

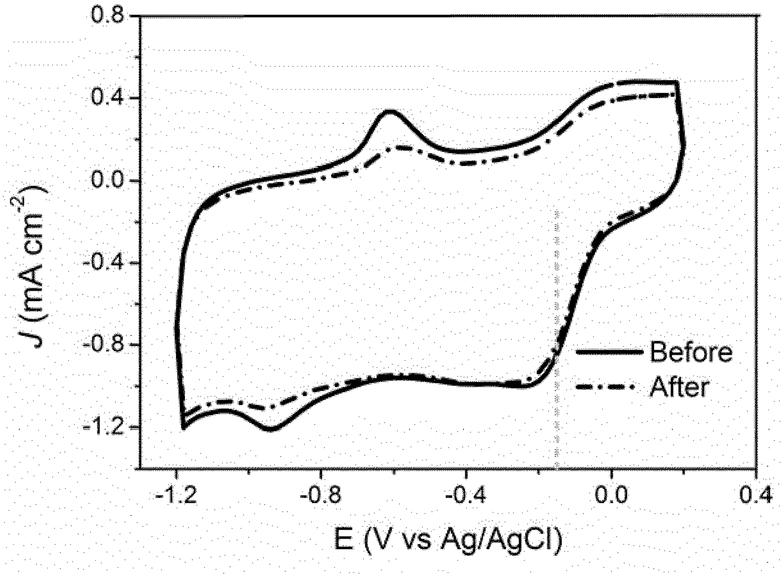


Figure 18

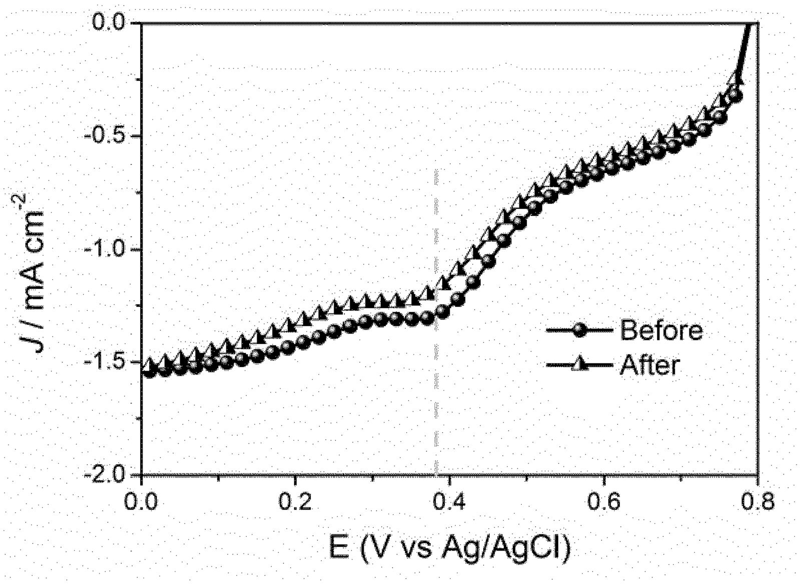

Europäisches Patentamt
European Patent Office
Office européen des brevets

# EUROPEAN SEARCH REPORT

Application Number
EP 12 17 6522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHONG-SHUAI WU ET AL: "3D Nitrogen-Doped Graphene Aerogel-Supported Fe 3 O 4 Nanoparticles as Efficient Electrocatalysts for the Oxygen Reduction Reaction", JOURNAL OF THE AMERICAN CHEMICAL SOCIETY, vol. 134, no. 22, 6 June 2012 (2012-06-06), pages 9082-9085, XP055053866, ISSN: 0002-7863, DOI: 10.1021/ja3030565 | 1-10, 17-28, 30,31 | INV. C01B31/00 C01B31/04 |
| A | * the whole document * | 11-16 | |
| X | YUANJIAN ZHANG ET AL: "Wet chemical synthesis of nitrogen-doped graphene towards oxygen reduction electrocatalysts without high-temperature pyrolysis", JOURNAL OF MATERIALS CHEMISTRY, vol. 22, no. 14, 15 February 2012 (2012-02-15), page 6575, XP055054054, ISSN: 0959-9428, DOI: 10.1039/c2jm00044j | 1-18, 24-31 | |
| A | * "Abstract", "Experimental"; table 1 * | 19-23 | TECHNICAL FIELDS SEARCHED (IPC) |
| | | | C01B |
| X | VINAYAN B P ET AL: "Novel platinum-cobalt alloy nanoparticles dispersed on nitrogen-doped graphene as a cathode electrocatalyst for PEMFC applications", ADVANCED FUNCTIONAL MATERIALS 20120821 WILEY-VCH VERLAG DEU, vol. 22, no. 16, 11 May 2012 (2012-05-11), pages 3519-3526, XP002692609, DOI: 10.1002/ADFM.201102544 | 1,2,7, 17,18, 24,27,30 | |
| A | * "Abstract";"Experimental section"; page 3521, last paragraph - page 3522, last line * | 3-6, 8-16, 19-23, 25,26, 28,29,31 | |

-/--

The present search report has been drawn up for all claims

1

| Place of search | Date of completion of the search | Examiner |
|---|---|---|
| Munich | 14 May 2013 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 17 6522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIN-YI YANG ET AL: "A powerful approach to fabricate nitrogen-doped graphene sheets with high specific surface area", ELECTROCHEMISTRY COMMUNICATIONS, ELSEVIER, AMSTERDAM, NL, vol. 14, no. 1, 31 October 2011 (2011-10-31), pages 39-42, XP028392471, ISSN: 1388-2481, DOI: 10.1016/J.ELECOM.2011.10.028 [retrieved on 2011-11-07] | 1,8,9, 17,18, 24,30 | |
| A | * "Experimental"; first paragraph of "Results and discussion" * | 2-7, 10-16, 19-23, 25-29,31 | |
| | ----- | | TECHNICAL FIELDS SEARCHED (IPC) |

1

The present search report has been drawn up for all claims

| Place of search | Date of completion of the search | Examiner |
|---|---|---|
| Munich | 14 May 2013 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010026046 A
- WO 2011095943 A

### Non-patent literature cited in the description


- **L. QU ; Y. LIU ; J.-B. BAEK ; L. DAI.** *ACS Nano,* 2010, vol. 4, 1321
- **X. LI ; H. WANG ; J.T. ROBINSON ; H. SANCHEZ ; G. DIANKOV ; H. DAI.** *J. Am. Chem. Soc,* 2009, vol. 131, 15939
- **Y.-C. LIN ; C.-Y. LIN ; P.-W. CHIU.** *Appl. Phys. Lett.,* 2010, vol. 96, 133110
- McCutcheon's, Vol.1: Emulsifiers & Detergents, McCutcheon's Directories. 2008, vol. 1
- **S.M. ZAKEERUDDIN ; M. GRÄTZEL.** *Adv. Fund. Mater.,* 2009, vol. 19, 2187-2202
- **WILLIAM S. HUMMERS JR. ; RICHARD E. OFFEMAN.** Preparation of Graphitic Oxide. *J. Am. Chem. Soc.,* 1958, vol. 80 (6), 1339
- **K.P. GONG ; F. DU ; Z.H. XIA ; M. DURSTOCK ; L.M. DAI.** *Science,* 2009, vol. 323, 760
- **R.L LIU ; D.Q. WU ; X. FENG ; K. MÜLLEN.** *Angew. Chem Int. Ed.,* 2010, vol. 49, 2565